# EUROPEAN PATENT APPLICATION

(11) **EP 2 583 567 A1**
(43) Date of publication of application: **24.04.2013**
(21) Application number: 11185589.6
(22) Date of filing: 18.10.2011
(51) Int. Cl.: A23L 2/44, A23L 2/56, A23F 3/16, A23L 3/3463, A23L 3/3499, A23L 3/3508

(54) **Preservative combinations comprising propionic acid and vanillin and/or cinnamic acid**

(71) Applicant: Purac Biochem N.V., 4206 AC Gorinchem (NL)
(72) Inventor: Heintz, Eelco Anthonius Johannes, 4201 GP Gorinchem (NL); Saurabh, Kumar, 3311 RG Dordrecht (NL)
(74) Representative: Pallard, Caroline Chantal Patricia

(57) **Abstract**

The present invention relates to a preservative system capable of protecting against spoilage by bacteria, yeasts and moulds in carbonated and non-carbonated beverages. In accordance with the invention this objective is realized with a preservative system comprising a combination of propionate with vanillin and/or cinnamate. Vanillin and propionate are both known for their anti mould action. However the dosages that are needed of the separate ingredients are too high for most applications. The present inventors found that potassium cinnamate at low concentrations has a positive effect on the inhibition of moulds in combination with vanillin and propionate. Moreover, the present invention, using a combination of vanillin, propionate and cinnamate accomplishes complete inactivation of all moulds at manageable sensory levels. Hence the present invention provides a preservation system comprising combinations of propionate with vanillin and/or cinnamate as well as applications of such preservation systems in alimentary products, especially carbonated and non-carbonated beverages.

## Description

### Field of the Invention

The present invention relates to a preservative system with a broad spectrum of applications. In particular, the invention provides a preservative system capable of protecting against spoilage by bacteria, yeasts and moulds in carbonated and non-carbonated beverages. The invention further provides the use of the preservative system as well as to alimentary products containing the preservative system, especially carbonated and non-carbonated beverages.

### Background of the Invention

Microbial spoilage of beverages is a significant concern in the beverage industry today. Beverages have varying degrees of sensitivity to microbiological spoilage depending on intrinsic factors of the beverage such as pH, nutrient content (e.g., juice, vitamin, or micronutrient content), carbonation level, Brix, water quality (e.g., alkalinity and/or hardness), and preservatives. Spoilage events occur when microorganisms are able to overcome the beverage's intrinsic factors and grow.

Microbiological spoilage can result from one or more yeasts, bacteria, and/or moulds. For example, yeasts and bacteria are capable of spoiling carbonated and non-carbonated beverages such as fruit drinks, teas, coffees, enhanced waters, etc.

The ability of yeasts and certain bacteria to grow anaerobically enables their growth in carbonated beverages. Typically, bacteria tend to produce off-flavors and odors with associated sedimentation. Spoilage by yeasts usually manifests itself as fermentation with gas and ethanol production, as well as sedimentation, off-flavors and odors, and loss of cloud or emulsion stability. Yeasts such as *Saccharomyces, Zygosaccharomyces, Candida, Dekkera spp.* and *Pichia* are often responsible for spoilage incidents in common beverages, both carbonated and non-carbonated.

Moulds are restricted to aerobic metabolism, and therefore do not usually grow in carbonated beverages. On the other hand, moulds may survive in low oxygen environments and thus can still spoil carbonated soft drinks when carbonation is diminished.

Mould spoilage of non-carbonated beverages, poses a more serious concern. Mould spoilage may be evident after mould mycelial growth, by floating globules, clumps or surface pellicles. Heat-processed beverages can be classified as hot-filled and aseptically- or cold-filled. Since they are heat-processed, both groups can be spoiled by heat-resistant fungi (HRM) that produce ascospores. These ascospores not only survive the heat treatment given to these beverages but also can be activated and grow during storage. Spores of heat resistant mould spores of *Byssochlamys, Neosartoria* and *Fusarium* can survive pasteurization and may spoil non-carbonated hot-filled products such as sport drinks and teas. Packaged waters are susceptible to growth by moulds as well. Moulds like *Penicillium* and *Aspergillus spp.* in particular cause spoilage of cold-filled beverages.

Protection against microbiological spoilage of beverages can be achieved using chemical preservatives and/or processing techniques such as hot filling, tunnel pasteurization, ultra-high temperature treatment (UHT) or pasteurization followed by aseptic packaging, and/or pasteurization followed by chilling the beverage.

Beverages having a pH > 4.6 must be processed such that spores are destroyed using ultra-high temperatures followed by aseptic filling into packages or retorting sealed packages of product.

Beverages with a pH < 4.6 can be chemically preserved, heat processed, and filled into packages such that the product is not re-contaminated. For example, process techniques such as cold filling with chemical preservatives.

Current preservation systems for acidic, shelf-stable carbonated and non-carbonated soft drinks rely on acidic preservatives, especially benzoic acid, benzoates, sorbic acid, sorbates and sulphite. These preservatives can have an impact on the flavour and the use of these preservatives is restricted in many countries. Furthermore, these acidic preservatives can not protect against mould spoilage when used in amounts that are considered acceptable e.g. in terms of organoleptic properties of the product.

It has therefore often been attempted to reduce the amount of sorbic and/or benzoic acid necessary to achieve microbial stability. One such attempt involves the addition of naturally occurring and less potentially toxic agents such as oils of cinnamon and thyme.

US 6,042,861 teaches the use of cinnamic acid in the preservation of carbonated and non-carbonated tea based beverages, so as to achieve a reduction in the amount of sorbic and/or benzoic acid necessary to inhibit microbial growth. The combination of 0.40 g/l of potassium sorbate and 30 ppm cinnamic acid is tested in a still tea based beverage. The compositions of US 6,042,861 contain substantial amounts of an acidulant in order to achieve preservation stability. In US 6,042,861 only preservation against yeast spoilage is tested. While it is demonstrated that the growth of moulds at beverage pH values is a substantial risk, protection against mould spoilage is not accomplished in US 6,042,861. Such protection would require substantial or complete inactivation of mould spores.

It is an object of the present invention to solve one or more of the aforementioned shortcomings of the existing methods of chemical preservation. It is a particular object of the present invention to provide a preservative system with a broad spectrum of activities against bacteria, yeasts and/or moulds, especially a system providing long-term protection against mould spoilage in carbonated as well as non-carbonated beverages.

### Summary of the Invention

In accordance with the invention this objective is realized with a preservative system comprising a combination of propionate with vanillin and/or cinnamate.

The present inventors found that binary combinations of propionate with vanillin or propionate with cinnamate were effective in inhibiting the growth of certain moulds often associated with spoilage of (non-carbonated) beverage, at dosages suitable for this kind of application.

The present inventors also observed that potassium cinnamate can be consumed by moulds like *Penicillium* and *Aspergillus* when the dosage is too low for inhibition of germination and outgrowth. Via this way potassium cinnamate is actually decarboxylated to styrene which is an unwanted chemical because of its unacceptable smell. Potassium cinnamate can thus not be used on its own in too low concentrations. The present inventors now found that potassium cinnamate at low concentrations does have a positive effect on the inhibition of moulds when used in combination with propionate and in particular in combination with propionate and vanillin.

Vanillin and propionate are both known for their antimicrobial action. However the dosages that are needed of the separate ingredients are much too high to be used as general antimicrobial system in sweet applications like beverages. Moreover, a total inactivation of mould and mould spores is not accomplished with the sole ingredients. By total inactivation it is meant that it is not possible to revive any mould spores after a period of exposure to the combination of cinnamate, vanillin and propionate. Using a combination of vanillin, propionate and cinnamate total inactivation of mould spores at manageable sensory levels can be accomplished, as will be explained and demonstrated in more detail in the appending examples.

Even more remarkably, the inventors found that a preservative system comprising propionate, cinnamate and vanillin resulted in protection against all moulds species tested.

In order to achieve these and other benefits, the preservative components only need to be used at levels well below the limits normally considered acceptable.

Hence the present invention provides for the first time a preservation system, relying on combinations of propionate with vanillin and/or cinnamate and in particular combinations of propionate, vanillin and cinnamate, as well as applications of such preservation systems in alimentary products, especially carbonated and non-carbonated beverages.

### Detailed Description of the Invention

A first aspect of this invention provides a preservative system comprising (i) propionic acid or a salt thereof, in combination with at least one component selected from (ii) vanillin and derivatives thereof and (iii) cinnamic acid and salts and derivatives thereof.

In a particularly preferred embodiment of the invention a preservative system as defined herein before is provided, comprising (i) propionic acid or a salt thereof, in combination with (ii) vanillin or a derivative thereof and (iii) cinnamic acid or a salt or a derivative thereof.

Propionic acid (or propanoic acid), is a well known food additive. As used herein, the term 'propionate' refers to any agent including the propionic acid anion and capable of liberating said anion upon dissolving the agent, especially propionic acid and propionate salts. Typically, the salt can be a water soluble salt of propionic acid, such as sodium propionate, calcium propionate and potassium propionate. In accordance with the present invention, the preservative system preferably comprises propionic acid, sodium propionate, calcium propionate, potassium propionate or a mixture of two or more of said agents.

Propionates are often used as preservatives, mainly against fungi, especially in bakery goods and in meat products against bacterial spoilage. Due to the strong smell, application of propionates in other products is limited. Sensory tests in model drinks have shown that the maximum acceptable amount is approximately 630 ppm.

In one preferred embodiment of this invention, the preservative system comprises propionate in an amount of less than 70 wt.% based on the total weight of the preservative system, preferably less than 60 wt.%, preferably less than 50 wt.%, preferably less than 40 wt.%, preferably less than 35 wt.%, preferably less than 30 wt.%, preferably less than 25 wt.%, preferably less than 20 wt.%, preferably less than 15 wt.%, preferably less than 12 wt.%, preferably less than 10 wt.%, based on the total weight of the preservative system.

In one preferred embodiment, the preservative system comprises propionate in an amount of more than 0.1 wt.%, based on the total weight of the preservative system, preferably more than 0.25 wt.%, preferably more than 0. 5 wt.%, preferably more than 1 wt.%, preferably more than 2.5 wt%, preferably more than 4 wt.%, preferably more than 5 wt%, preferably more than 6 wt.%, preferably more than 7 wt.%, preferably more than 8 wt.%, based on the total weight of the preservative system.

As is known by those skilled in the art, propionate/propionic acid can be obtained by fermentation. In the context of this invention, it is highly advantageous to employ propionate obtained by fermentation, in particular a composition obtainable by fermenting glucose, lactose or lactate, particularly lactate, using an appropriate micro-organism, such as propionic acid bacteria. Hence, in a particularly preferred embodiment of the invention the preservative system comprises a ferment or fermentation product as the source of propionate. Such a fermentation product or ferment is typically characterized by the presence of other fermentation products such as acetate and/or succinate.

Hence, in a preferred embodiment of the invention the preservative composition is characterized by the presence of acetate, the ratio of propionate : acetate being more than 1, preferably more than 1.5, most preferably more than 1.75. Said ratio is preferably less than 3, more preferably less than 2.5, most preferably less than 2.25. Said ratio can for example be approximately 2.

Fruit- or vegetable-based extracts or compositions can be used as substrate for fermentation, such as a melon-based extract or a composition originating from tomatoes. Hence, in an embodiment of the invention, the preservative system comprises fermentation product or ferment obtained from fermentation of fruit- and/or vegetable-based extracts or compositions, especially melon-based abstract and/or tomato based abstracts. Such ferments or fermentation products have very favorable organoleptic profiles, which contribute positively to the taste and odor experience of food and drink products.

Raw propionate ferments typically comprise propionate in amounts of 0.02 wt% and up to 6 wt%. Raw ferments based on fruit- or vegetable-based extracts may contain up to 12 wt% of propionate. In an embodiment of the invention such raw ferments may be combined with the other preservative agent or agents of this invention, yielding a composition that may be used as such. Alternatively, raw propionate ferments may be concentrated, purified, dried, etc., as described in more detail herein below,

Cinnamic acid (3-phenyl-2-propenoic acid) is well known as a food ingredient, which obtained FEMA-GRAS status in 1965. As will be understood by those skilled in the art, any soluble cinnamic acid salt may be used in accordance with the invention. Typically, the cinnamate is a water soluble salt of cinnamic acid. For convenience, the term 'cinnamate' is used herein to refer to any substance containing the cinnamic acid anion, in particular to denote cinnamic acid and the salts thereof. Furthermore, a number of cinnamic acid derivatives are known and used in the food industry, including p-dimethylaminocinnamate, cinnamaldehyde, cinnamyl acetate, cinnamyl alcohol, cinnamyl benzoate, cinnamyl cinnamate, cinnamyl formate, cinnamyl isobutyrate, cinnamyl isovalerate and cinnamyl phenylacetate, which may also be referred to herein as 'cinnamate derivatives'. In accordance with the invention these derivatives are equally suitable for use in the preservative system either alone or in combination with cinnamic acid or other cinnamate salts or derivates. In a particularly preferred embodiment of the invention the preservative system comprises cinnamic acid and/or a cinnamic acid salt selected from the group of sodium cinnamate and potassium cinnamate. In a preferred embodiment, the preservative comprises potassium cinnamate.

In one preferred embodiment, the preservative system comprises cinnamate and/or a cinnamate derivative in an amount of less than 50 wt.% based on the total weight of the preservative system, preferably less than 45 wt.%, preferably less than 40 wt.%, preferably less than 35 wt.%, preferably less than 30 wt.%, preferably less than 25 wt.%, preferably less than 20 wt.%, preferably less than 15 wt.%, preferably less than 12 wt.%, preferably less than 11 wt.%, preferably less than 10 wt.%, based on the total weight of the preservative system.

In one preferred embodiment, the preservative system comprises cinnamate and/or cinnamate derivative in an amount of more than 0.1 wt.%, based on the total weight of the preservative system, preferably more than 0.25 wt.%, preferably more than 0. 5 wt.%, preferably more than 1 wt.%, preferably more than 2.5 wt%, preferably more than 4 wt.%, preferably more than 5 wt%, preferably more than 6 wt.%, preferably more than 7 wt.%, preferably more than 8 wt.%, based on the total weight of the preservative system.

Vanillin (4-Hydroxy-3-methoxybenzaldehyde) is approved as a food additive by authorities world wide. Vanillin was given FEMA-GRAS status in 1965. Derivatives of vanillin such as methyl vanillin, ethyl vanillin and vanillin 2,3-butanediol acetal may also suitably used in accordance with this invention, although the use of vanillin is particularly preferred.

In one preferred embodiment, the preservative system comprises vanillin and/or a vanillin derivative in an amount of less than 25 wt. % based on the total weight of the preservative system, preferably less than 20 wt. %, preferably less than 15 wt. %, preferably less than 12 wt. %, preferably less than wt. %, preferably less than 10 wt. %, preferably less than 9 wt. %, preferably less than 8 wt. %, preferably less than 7 wt. %, preferably less than 6 wt. %, preferably less than 5 wt. %, preferably less than 4 wt. %, preferably less than 3.5 wt. %, preferably less than 3 wt. %, based on the total weight of the preservative system.

In one preferred embodiment, the preservative system comprises vanillin and/or a vanillin derivative in an amount of more than 0.025wt. %, based on the total weight of the preservative system, preferably more than 0.05 wt. %, preferably more than 0.1 wt. %, preferably more than 0.25 wt. %, preferably more than 0.5 wt.%, preferably more than 1 wt. %, preferably more than 1.5 wt%, preferably more than 2 wt. %, preferably more than 2.5 wt. %, based on the total weight of the preservative system.

In one preferred embodiment, the preservative system is characterized by a (molar) ratio of (i) propionate : (ii) vanillin and/or derivatives thereof of less than 100 (1.0:0.01), preferably less than 40 (1.0:0.025), preferably less than 20 (1.0:0.05), preferably less than 15 (1.0:0.067), preferably less than 10 (1.0:0.1), preferably less than 5 (1.0:0.2). In one preferred embodiment, the preservative system is characterized by a ratio of (i) propionate: (ii) vanillin and/or derivatives thereof of more than 0.1 (1.0:10), preferably more than 0.5 (1.0:2), preferably more than 1 (1.0:1), preferably more than 2 (1.0:0.5), preferably more than 2.5 (1.0:0.4).

In one preferred embodiment, the preservative system is characterized by a ratio of (i) propionate : (iii) cinnamate of less than 100 (1.0:0.01), preferably less than 40 (1.0:0.025), preferably less than 20 (1.0:0.05), preferably less than 15 (1.0:0.067), preferably less than 10 (1.0:0.1), preferably less than 5 (1.0:0.2). In one preferred embodiment, the preservative system is characterized by a ratio of (i) propionate : (iii) cinnamate of more than 0.1 (1.0:10), preferably more than 0.5 (1.0:2), preferably more than 1 (1.0:1), preferably more than 2 (1.0:0.5), preferably more than 2.5 (1.0:0.4).

The preservative system of the present invention can optionally include other preservatives. Weak acid preservatives are preferred for this purpose. As indicated in the foregoing however, an advantage of the present invention resides in the fact that the presence of other preservatives, especially synthetic preservatives such as benzoates and sorbates can be minimized or avoided altogether while achieving the desired level of microbial stability. The preservative system of the present invention typically contains no or only minor amounts of additional preservative agents, such as, in particular, benzoate and/or sorbate. In a preferred embodiment of the invention the preservative system contains less than 1 wt% of preservative agents selected from the group consisting of sorbates and benzoates, preferably less than 0.5 wt%, preferably less than 0.1 wt%, more preferably less than 0,05 wt%. In a particularly preferred embodiment of the invention the preservative system is essentially or completely free from preservative agents selected from the group of benzoates and sorbates.

In one embodiment of the invention the preservative composition further comprises a carrier material, the choice of which will largely depend on the physical form in which the preservative system is to be provided. The carrier material is typically used in any amount required to provide a product that has the desired properties relating to production, storage and dosing.

In one embodiment of the invention, a preservative system in the form of a free flowing powder or granulate, which may comprise a carrier material. In another preferred embodiment a free flowing powder is provided consisting essentially of the preservative combination. Such a free flowing powder may be obtained by combining the various components in an aqueous dispersion or solution followed by drying, e.g. spray-drying.

In another embodiment of the invention the preservative system is produced by drying, typically spray-drying, of an aqueous propionate ferment, before or after combining with the other preservative agents of this invention. Such a preservative system may contain propionate in amounts of more than 30 wt%, preferably more than 40 wt%, most preferably more than 50 wt%.

In another embodiment a liquid preservative system is provided comprising solution or dispersion of the above defined components in an aqueous phase, which for instance may be obtained by concentrating the aqueous dispersion or solution.

In another embodiment of the invention the preservative system is produced by concentrating an aqueous propionate ferment before or after combining with the other preservative agents of this invention. Such a preservative system may contain propionate in amounts of more than 10 wt%, preferably more than 20 wt%, most preferably more than 25 wt%.

As discussed herein the present preservative system is capable of preventing and/or inhibiting the growth of, and/or killing of a micro-organism in a food system. This may be slowing or arresting a micro-organism, or by killing the micro-organism present on contact with the present composition. In a highly preferred aspect the microbiocidal or microbiostatic effect is a fungicidal or fungistatic effect, optionally including effect against yeasts. In a preferred aspect the microbicidal or microbiostatic effect is in respect of an organism associated with food spoilage or food borne disease. In a preferred aspect the microbicidal or microbiostatic effect is in respect of at least one, more preferably at least two, more preferably at least three organisms selected from Yeasts, especially from the species of *Candida* (e.g. *C*. *krusei, C. parapsilosis, C. utilis, C. valida*)*, Dekkera* (e.g. *D*. *bruxellensis*), *Debaryomyces* (e.g. *D. hansenii*), *Hanseniaspora* (e.g. *H. uvarum*) *Kluyveromyces* (e.g. *K. loctis*)*, Pichia* (*P. membranaefaciens*)*, Rhodosporidium, Rhodotorula* (*Rh mucilaginosa*), *Saccharomyces* (e.g. *S. bayanus, S. boulardi, S. carlsbergensis, S. cerevisiae, S. exiguus, S. florentinus, S. unisporus), Zygosaccharonmyces* (e.g. *Z. rouxii, Z baili*) and moulds, especially from the species of *Aspergillus* (e.g. A. *niger, A. restrictus, A. versicolor, A. flavus*)*, Byssochlamys* (e.g. *B*. *fulva, B. nivea), Eupenicillium, Eurotium, Fusarium (F. oxysporum, F. graminearum, F. solani*), *Geotrichum, Mucor, Neosaftorya* (e.g. *N. fischeri var. fischerl*), *Penicillium* (e.g*. P*. *islandicum, P. citrinum, P. chrysogenum, P. aurantiogriseum, P. brevicompactum, P. camembertii, P. candidum, P. chrysogenum, P. commune, P. corylophilum, P. cyclopium, P. discolor, P. nalgiovense, P. rogueforti*)*, Talaryomyces* (e.g. *T. macrosporus*)*.* In one preferred embodiment of the invention the fungicidal effect is in respect of one or more moulds species selected from *Aspergillus, Penicillium, Byssochlamys* and *Fusarium.*

The present invention is particularly effective in preventing spoilage of beverages that can be initiated by either vegetative mould hyphae or spores of moulds that are capable of germinating to a vegetative form when suspended in a beverage. Mould spores may not be inactivated by the presence of the preservative system invention, but the spores are either prohibited from germinating in the presence of the preservative system or the vegetative form of the mould that results upon germination is prohibited from growth beyond a small number of cell cycle replications. In one preferred embodiment the preservative system is capable of substantial or complete inactivation of mould spores. In an embodiment the preservative system is capable of prohibiting an increase of the mould spore count of a beverage, which typically means that the initial spore count (spores/ml) in a (test) beverage will not increase after contacting it with the preservative system of the invention. Even more preferably the preservative system is capable of decreasing the mould spore count of a beverage, which typically means that the initial spore count (spores/ml) in a (test) beverage will decrease after contacting it with the preservative system of the invention. Preferably the preservative system is capable of decreasing mould spore counts (spores / ml) by at least 10 %, more preferably at least 25 %, more preferably at least 50 %, more preferably at least 75 %, more preferably at least 85 % and most preferably at least 90 %. Preferably the mould spores selected from *Aspergillus, Penicillium, Byssochlamys* and *Fusarium* spores.

A second aspect of the invention concerns an alimentary product, comprising an effective amount of (i) propionic acid or a salt thereof, in combination with at least one component selected from (ii) vanillin and derivatives thereof and (iii) cinnamic acid and salts and derivatives thereof.

One preferred embodiment concerns an alimentary product comprising an effective amount of a combination (i) propionic acid or a salt thereof, in combination with at least one component selected from (ii) vanillin or a derivative thereof and (iii) cinnamic acid or a salt or a derivative thereof.

As used herein the term 'effective amount' refers to an amount sufficient to preserve the product to which the present preservative system is added, i.e. to keep the product from microbial spoilage. As commonly understood in the art, the definitions of the terms "preserve," "preservative," and "preservation" do not provide a standard time period for how long the subject to be preserved is kept from spoilage, decomposition, or discoloration. The time period for "preservation" can vary greatly depending on the subject matter. As used herein, the terms "preserve," "preservative," and "preservation" refer to the protection against spoilage of a product that is the result of the growth of spoilage microorganisms for a period of at least 1 weeks, preferably at least 2 weeks, preferably at least 5 weeks, preferably at least 10 weeks, preferably at least 15 weeks. This period is in keeping with the time required to transport a beverage product from location of manufacture, through distribution channels, into the hand of the consumer. Typically, the product is preserved under ambient conditions, which include the full range of temperatures experienced during storage, transport, and display (e.g., 0°C to 40°C, 10°C to 30°C, 20°C to 25°C) without limitation to the length of exposure to any given temperature. Absence of spoilage is noted by absence of any evidence of growth of spoilage organisms (turbidity, viable count, direct microscopic count or other standard methods of enumeration) and by the absence of any discernable change in the product attributes that could be routinely attributed to metabolism of spoilage organisms.

As noted herein before, the present preservative system is particularly suited for beverages, including non-carbonated beverages. Hence in a preferred embodiment an alimentary product as defined above is provided, which is selected from the group consisting of beverages, more preferably from the group of still beverages. Some examples of still beverages include flavored waters, tea, coffee, nectars, mineral drinks, sports beverages, vitamin waters, juice-containing beverages, punches or the concentrated forms of these beverages,

In one preferred embodiment, the beverage comprises vanillin and/or vanillin derivative in an amount of less than 1000 ppm, preferably less than 800 ppm, preferably less than 700 ppm, preferably less than 600 ppm, preferably less than 500 ppm, preferably less than 450 ppm, preferably less than 400 ppm, preferably less than 375 ppm, preferably less than 350 ppm.

In one preferred embodiment, the beverage comprises vanillin and/or vanillin derivative in an amount of more than 1 ppm, preferably more than 2.5 ppm, preferably more than 5 ppm, preferably more than 10 ppm, preferably more than 25 ppm, preferably more than 50 ppm, preferably more than 100 ppm, preferably more than 150 ppm, preferably more than 200 ppm, preferably more than 250 ppm, most preferably more than 275 ppm.

In one preferred embodiment, the beverage comprises cinnamate and/or cinnamate derivative in an amount of less than 1000 ppm, preferably less than 800 ppm, preferably less than 700 ppm, preferably less than 600 ppm, preferably less than 500 ppm, preferably less than 450 ppm, preferably less than 400, preferably less than 350 ppm, ppm, preferably less than 300 ppm, preferably less than 275 ppm, preferably less than 250 ppm, most preferably less than 225 ppm.

In one preferred embodiment, the beverage comprises cinnamate and/or cinnamate derivative in an amount of more than 1 ppm, preferably more than 2.5 ppm, preferably more than 5 ppm, preferably more than 10 ppm, preferably more than 25 ppm, preferably more than 50 ppm, preferably more than 100 ppm, preferably more than 125 ppm, preferably more than 150 ppm, preferably more than 175 ppm.

In one preferred embodiment, the beverage comprises propionate in an amount of less than 2000 ppm, preferably less than 1500 ppm, preferably less than 1200 ppm, preferably less than 1100 ppm, preferably less than 1000 ppm, preferably less than 900 ppm, preferably less than 850, preferably less than 825 ppm, ppm, preferably less than 800 ppm.

In one preferred embodiment, the beverage comprises propionate in an amount of more than 1 ppm, preferably more than 2.5 ppm, preferably more than 5 ppm, preferably more than 10 ppm, preferably more than 25 ppm, preferably more than 50 ppm, preferably more than 100 ppm, preferably more than 250 ppm, preferably more than 300 ppm, preferably more than 350 ppm, preferably more than 400 ppm, preferably more than 450, preferably more thab 475, most preferably more than 500 ppm.

In one embodiment a beverage as defined herein above is provided, which contains less than 50 ppm of preservative agents selected from the group of sorbates and benzoates, preferably less than 10 ppm, more preferably less than 5 ppm, more preferably less than 1 ppm, more preferably less than 0.5 ppm, more preferably less than 0.1 ppm and most preferably less than 0.05 ppm. This ensures that no negative taste effects are observed. In a particularly preferred embodiment of the invention the beverage is essentially or completely free from preservative agents selected from the group of benzoates and sorbates.

In one preferred embodiment of the invention, the beverage is a non-carbonated beverage or still beverage.

Herein, the term "still beverage" is any combination of water and ingredient which is intended for human consumption and which possesses no more than 0.2 volumes of carbon dioxide, as opposed to carbonated beverages, which typically possess a carbon dioxide concentration of 0.2 volumes of CO₂ or greater. The term "volume of CO₂" is understood to mean a quantity of carbon dioxide absorbed into the liquid wherein one volume CO₂ is equal to 1.96 grams of carbon dioxide (CO₂) per liter of product (0.0455M) at 25°C.

Such beverages may be supplemented with flavours, sweeteners, fruit juices vitamins, nutrients, minerals, amino acids, proteins, carbohydrates, etc.

Typically, beverages according to the present invention will possess a specified range of acidity. The invention typically can function at a pH within the range of 2-7. In one preferred embodiment of the invention, the pH is at least 2, preferably at least 2.5, preferably at least 2.75, preferably at least 3, preferably at least 3.2, preferably at least 3.3, preferably at least 3.4, preferably at least 3.5. In one preferred embodiment of the invention, the pH of the beverage is below 7, preferably below 6, preferably below 5.5, preferably below 5, preferably below 4.75, preferably below 4.6, preferably below 4.5. For highly acidic beverages, the invention is not limited by the type of acidulant employed in acidifying the product. Typically, in accordance with the present invention, acidulants may be inorganic acids, such as phosphoric acids, or organic acids, such as citric, malic, ascorbic, tartaric, lactic, gluconic, and succinic acid, fumaric acid. The various acids can be combined with salts of the same or different acids in order to manage pH or the buffer capacity of the beverage to a specified pH or pH range. Virtually any organic acid salt can be used so long as it is edible and does not provide an off-flavor. The choice of salt or salt mixture will be determined by the solubility and the taste. Citrate, malate and ascorbate yield ingestible complexes whose flavors are judged to be quite acceptable, particularly in fruit juice beverages. Tartaric acid is acceptable, particularly in grape juice beverages, as is lactic acid. Longer-chain fatty acids may be used but can affect flavor and water solubility. For essentially all purposes, the malate, gluconate, citrate and ascorbate and lactate moieties are preferred.

Certain exemplary embodiments of the beverage product of the invention include juice-containing beverages and juices, or the concentrated forms of juice-containing beverages as well as beverage concentrates which contain at least about 45% by weight of juice, especially fruit or vegetable juice.

By way of example, juice can be obtained from the fruit of apple, cranberry, pear, peach, plum, apricot, nectarine, grape, cherry, currant, raspberry, goose-berry, blackberry, blueberry, strawberry, lemon, orange, grapefruit, passionfruit, mandarin, mirabelle, tomato, lettuce, celery, spinach, cabbage, watercress, dandelion, rhubarb, carrot, beet, cucumber, pineapple, custard- apple, coconut, pomegranate, guava, kiwi, mango, papaya, watermelon, lo han guo, cantaloupe, pineapple, banana or banana puree, lemon, mango, papaya, lime, tangerine, and mixtures thereof.

Preferred juices are the citrus juices, and most preferred are the non-citrus juices, apple, pear, cranberry, strawberry, grape, papaya, mango and cherry. Any juice can be used to make the beverage of this invention. If a beverage concentrate is desired, the fruit juice is concentrated by conventional means from about 12° Brix to about 65° Brix. Beverage concentrates are usually 40° Brix or higher (about 40% to about 75% sugar solids).

The invention could be used to preserve a formulation that is essentially 100% juice. The invention can be used in products containing juice wherein juice concentration is below 100%. Lowering of juice concentration below 10% will typically favor the use of lowered concentrations of preservatives. In a preferred embodiment of the invention the beverage product comprises fruit juice in an amount of less than 5 % (v/v), preferably less than 4 % (v/v), preferably less than 3 % v/v, more preferably less than 2 % v/v, most preferably less than 1 % v/v. In another embodiment of the invention the beverage product comprises fruit juice in an amount exceeding 10 % v/v, preferably in an amount exceeding 12 % v/v, more preferably in an amount exceeding 15 % v/v, most preferably in an amount exceeding 20 % v/v. Certain further examples of the beverage product of the invention include tea based beverage (carbonated or non-carbonated) and flavored waters.

Another exemplary embodiment of the beverage product of the invention includes tea based beverages. Tea based beverages typically contain the solid extracts of leaf material from Camellia sinensis, Camellia assamica, or Aspalathus linearis. The tea may be added to the beverage in various forms including an extract, a concentrate, a powder or as granules. Without preservation, tea acts as a nutrient that enhances the potential for microbial spoilage, at low concentrations, such as 0.01 to 3%.

Another exemplary embodiment of the beverage product of the invention includes flavored water. The term "flavored water" refers to a beverage essentially consisting of water with added natural or artificial flavors, herbs, and sweeteners, which may be carbonated and non-carbonated. The flavored water type beverages are usually low in calories, as compared to regular soft drinks, and are typically marketed as diet or light drinks. In many cases, flavored waters comprise fruits or fruit juices, in limited amounts, as a source of the vitamins, minerals and flavors.

Further exemplary embodiments of the beverage product of invention include sports beverages (carbonated or non-carbonated), especially electrolyte balancing sports beverages. Typical sport beverages contain water, sucrose syrup, glucose-fructose syrup, and natural or artificial flavors. These beverages can also contain sodium chloride, citric acid, sodium citrate, mono-potassium phosphate, as well as other natural or artificial substances which serve to replenish the balance of electrolytes lost during perspiration.

The preservation function of the present invention in beverage formulations typically is not affected by the type of sweeteners present therein. The sweetener may be any sweetener commonly employed for use in beverages. Sweeteners suitable for use in various embodiments of the beverages disclosed here include nutritive and non-nutritive, natural and artificial or synthetic sweeteners. The sweetener can include a monosaccharide or a disaccharide. Peptides possessing sweet taste are also permitted. The most commonly employed saccharides include sucrose, fructose, dextrose, maltose and lactose and invert sugar. Mixtures of these sugars can be used. Other natural carbohydrates can be used if less or more sweetness is desired. Suitable non-nutritive sweeteners and combinations of such sweeteners include e.g. aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose.

Beverage products typically contain flavors of various types and nature. In general, the beverage preservative system according to the present invention is compatible with beverages formulated to contain artificial flavours, natural flavors, botanical flavors, fruit flavors, aqueous essences, etc. The preservation function of the present invention is typically is not affected by such components. The term "botanical flavor" refers to flavors derived from parts of a plant other than the fruit. Also included within the term "botanical flavor" are synthetically prepared flavors made to simulate botanical flavors derived from natural sources. Botanical flavors can be derived from natural sources such as essential oils and extracts, or can be synthetically prepared. As used herein, the term "aqueous essence" refers to the water soluble aroma and flavor materials which are derived from fruit juices.

Beverage products typically can be fortified with added nutrients, vitamins, minerals, trace elements and the like. Such additional components typically do not affect the preservation function of the invention. Non-limiting examples of such additional components that may typically be present in the beverages of the invention include vitamins A, B1, B2, B6, B12, C, D, E, K, Biotin, Folic Acid, Pantothenic Acid, Niacin, calcium, magnesium, iron, zinc, potassium, selenium, copper, manganese, etc.

The preservative system of the invention may also function in beverage products of the meal substitute type, in which case substantial amounts of protein, carbohydrate, dietary fibers and/or lipids are typically present. Another aspect of the invention concerns the use of the preservative system of this invention, for the preservation of an alimentary product, especially a beverage as defined previously. Yet another aspect of the invention concerns a method of preserving an alimentary product, especially a beverage as defined previously, comprising the step of adding to said product the preservative system of this invention. Preferred embodiments concern uses and methods, wherein the preservation comprises inactivation of mould spores and/or inhibiting mould growth. In particularly preferred embodiments the mould is a mould selected from the group consisting of *Fusarium oxisporum, Aspergillus niger, Byssoaclamys fuvla* and *Penicillium sp.* In a particularly preferred embodiment uses and methods are provided, wherein the preservation comprises inactivation of spores and/or inhibiting growth of at least two or at least three or at least four of the above moulds. The details and preferred embodiments of these aspects of the invention will be readily understood by those skilled in the art based on the foregoing detailed descriptions of the preservative system and products containing them.

Thus, the invention has been described by reference to certain embodiments discussed above. It will be recognized that these embodiments are susceptible to various modifications and alternative forms well known to those of skill in the art.

Many modifications in addition to those described above may be made to the structures and techniques described herein without departing from the spirit and scope of the invention. Accordingly, although specific embodiments have been described, these are examples only and are not limiting upon the scope of the invention.

Furthermore, for a proper understanding of this document and in its claims, it is to be understood that the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

All patent and literature references cited in the present specification are hereby incorporated by reference in their entirety.

The following examples are offered for illustrative purposes only, and are not intended to limit the scope of the present invention in any way

### Example: Anti-fungal combinations with preservative potential for beverages.

### Introduction

In this example the effect of propionate, potassium cinnamate and vanillin was tested against a selection of 4 moulds that are associated with spoilage of non carbonated beverages. The combination of these three ingredients was derived from a formulation of 200ppm potassium cinnamate and 300ppm vanillin which appears to be a substitution of the benzoate /sorbate preservative system in carbonated beverages (data not shown). The addition of propionate was hypothesized to broaden the spectrum of applications to non-carbonated beverages.

Besides testing the sole ingredients against the moulds the effect of combinations were tested, in all cases at beverage pH. These combinations form the basis of a potential preservative system for still beverages.

The total inactivation of spores was discovered by the execution of a long term application experiment. To see the long term anti microbial effect in beverage application, several dosage levels of the propionate, vanillin, cinnamate formulation were tested in an apple juice based model drink. Data obtained from this study showed inhibition of outgrowth of mould spores. Moreover, a total inactivation of mould spores have been observed in some concentrations after 3 weeks of incubation.

### Methods and materials

### 2.1 Cultures and culture conditions

Table 1 shows the cultures that were used in all tests.

The cultures were grown on Malt extract agar (MEA) at pH 5.5 at 25°C.

### 2.2 media

The medium that was used for the tests of single ingredients against single moulds was Malt extract agar (Oxoid) adjusted on pH 3.2-3.5. Table 2 shows the components of the model beverages as it is used in the binary, ternary and long term application tests.

### 2.3 Components

The components that were used in the tests are mentioned in table 3. The formulations that were used in the long term application tests are shown in table 4.

### 2.4 Spore preparation

5ml of water comprising 0.05% tween was poured on a layer of sporulating mould. Spores were scraped of and the liquid was transferred to a sterile tube containing 4mm glass beats. After vigorous shaking the liquid is filtered by glass wool. The filtrate was used as inoculum.

### 2.5 Single moulds tests against a single component

### 2.5.1 solid agar Plate preparation

Each experiment existed of 10 MEA agar plates containing a successive amount of component, starting from 0ppm to the maximal used concentration.

MEA was prepared by dissolving 20g of Malt extract (Difco, England), 1g of Peptone (Becton Dickinson, USA), 20g of glucose and 20g of bacteriological agar (No1. Oxoid, England) in 1l of dematerialized water. The pH was adjusted to 3.2 by adding 5.9ml of Hcl 1M after heat sterilization.

A stock solution was made for each component. The stock was 25 times the maximal used concentration. A successive amount from 0 to 900µl of these stocks, making the concentration range, was pipetted in 10, 50ml capped test tubes.

Subsequently, 25 ml of warm (80-90°C) MEA agar was pipetted, using a sterile 25ml pipette, in the tubes and the tubes were vortexed slowly but vigorously. Next, the component containing agar was poured out in 9 cm Petri dishes.. Besides single components against single moulds, combinations of propionate with potassium cinnamate or vanillin were tested on solid agar. To prepare these binary combinations 6.25 ml of a 4 times concentrated component was mixed with the other components that was also 4 times concentrated. The mix of components were mixed with 12.5ml double concentrated MEA to reach the preferred concentrations.

### 2.5.2 preparation of 96 well plates

The tests where two components or more components were combined in model drink were carried out in sterile 96-well microtiter plates. Sterile matrix was prepared according recipe of Nestle with increasing quantities of two different inhibitors. The concentrations of each inhibitor were presented in 8 equal concentration steps that ranged from 0 to 1 -2 times the (estimated) MIC value of particular mould for a particular inhibitor resulting in 64 different media. 200 µl of each medium was transferred to a panel of a sterile 96-well microtiter plate.

Completed well plates were stored at 4 °C until further use. The data was obtained via optical observation of growth.

### 2.6 Inoculation and incubation

### 2.6.1. Agar plate experiments

After the plates were dried a dot was spotted at the backside and in the centre of the petridish 0.5 µl of the mould spore solution was spotted on the agar targeting the dot in the centre. When the drop was dried in, the plates were placed bottom down in the incubator at 25°C.

The growth of colonies was determined by measurement of the colony diameter at different points in time. The growth curves were converted to dose response curves as described in 2.6.

### 2.6.2 model drink experiments

Spores of all moulds were collected via the method as described in 2.3. Spores were counted using the Burker-turk method and adjusted to a log5 per ml in PFZ and mixed to a homologue suspension. This suspension was diluted 100 times for inoculation.

### 2.7 Data processing of agar plate experiments

The data from the agar plate experiments were obtained by measuring the colony size changes. The change in time was interpreted as growth speed and growth curves were plotted.

To convert the growth curves to dose response curves the p Max (maximum growth rate) was calculated per concentration of antimicrobial component. The curves were fitted to a Logistic Dose Response (LDR) Intercept Form (Equation 8013) using Table curve 2D version 5.1

**Table 1. Used micro-organisms.**

| **Mould** | **acronym** | **Reference** | **origin** |
|---|---|---|---|
| *Fusarium oxisporum* | Fusox1 | CBS 111552 | Fruit juice after |
| *Byssoaclamys fulva* | Bysful2 | CBS 113225 | Multifruit juice |
| *Penicillium sp* | Pen381 | AR 381 | Sweet cream cheese |

**Table 2. model drink composition.**

| **Ingredient** | | **Amount [g]** |
|---|---|---|
| Water | Taste water | 949.85 |
| Sucrose | Granulated sugar - Van Gilse | 40.0 |
| Apple juice concentrate | Cargill | 8.30 |
| Apple flavour | Givaudan 55078-DO | 0.35 |
| Citric acid | Across, M&A-021 | 1.50 |

**Table 3. Used components and dosage ranges**

| **component** | **Origin** | **Used range (% w/v)** |
|---|---|---|
| Potassium cinnamate | reaction product from Cinnamic acid (commerically available) and potassium hydroxide hydroxide | 0-0.018 |
| Propionate | Acros organics, Belgium | 0-0.18 |
| vanillin | Rhodia | 0-0.18 |
| Potassium sorbate | Acros organics, Belgium | 0-0.045 |
| Sodium benzoate | Acros organics, Belgium | 0-0.045 |

**Table 4. Used formulations in the application tests.**

| **Formulations** | **Vanillin** | **K-cinnamate** | **propionate** | **Benzoate** | **Sorbate** |
|---|---|---|---|---|---|
| 1 | 300 ppm | 200 ppm | 500 ppm | 0 | 0 |
| 2 | 300 ppm | 200 ppm | 250 ppm | 0 | 0 |
| 3 | 300 ppm | 100 ppm | 500 ppm | 0 | 0 |
| 4 | 150 ppm | 200 ppm | 500 ppm | 0 | 0 |
| 5 | 150 ppm | 100 ppm | 500 ppm | 0 | 0 |
| 6 | 150 ppm | 200 ppm | 250 ppm | 0 | 0 |
| 7 | 300 ppm | 100 ppm | 250 ppm | 0 | 0 |
| 8 | 150 ppm | 100 ppm | 250 ppm | 0 | 0 |
| 9 | 0 | 0 | 0 | 180 ppm | 335 ppm |
| 10 | 0 | 0 | 0 | 0 | 0 |
| 11 | 300 ppm | 200 ppm | 1000 ppm | 0 | 0 |
| 12 | 300 ppm | 200 ppm | 1250 ppm | 0 | 0 |
| 13 | 300 ppm | 200 ppm | 800 ppm | 0 | 0 |

### Results

### 3.1 Single components on pure cultures

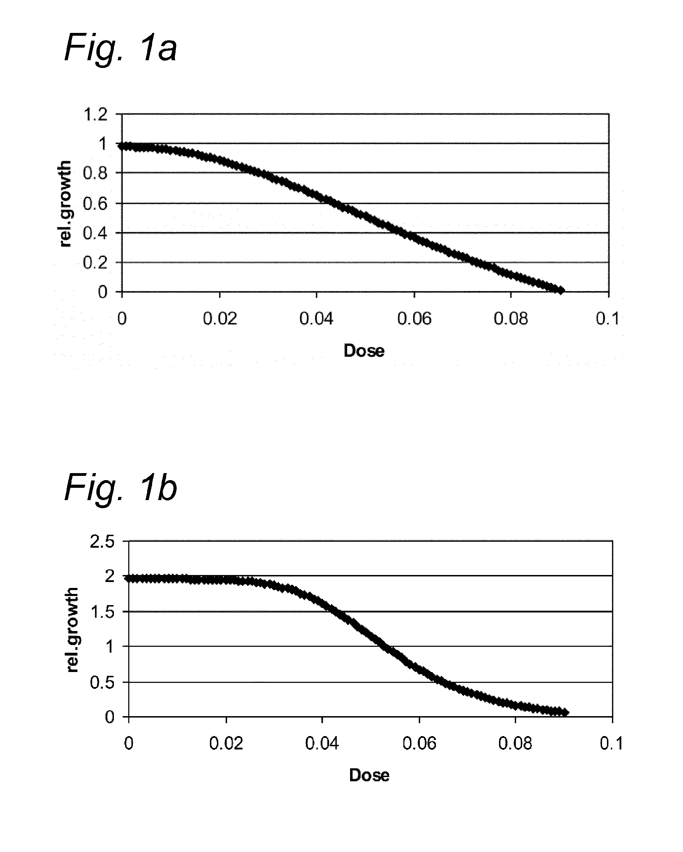

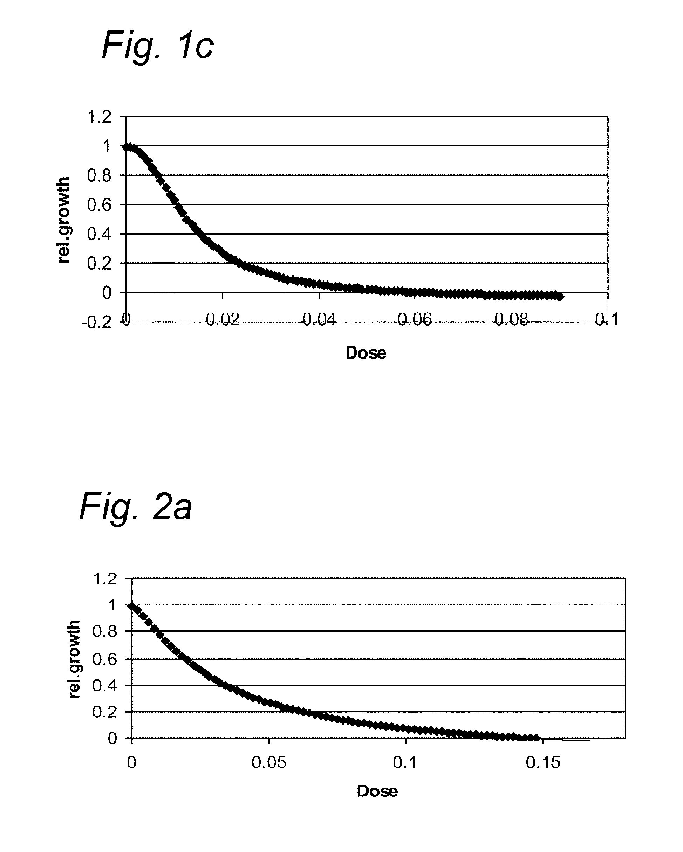

In order to show the effect of the sole components on pure cultures of moulds some agar plate experiments were done. The results for vanillin are shown in figures 1a-c. These figures show that all moulds are sensitive to vanillin and that approximately 0.09% (900 ppm) is needed for an overall inhibition. Earlier done taste experiments showed that the maximal manageable amount of vanillin in beverages should be 300ppm.

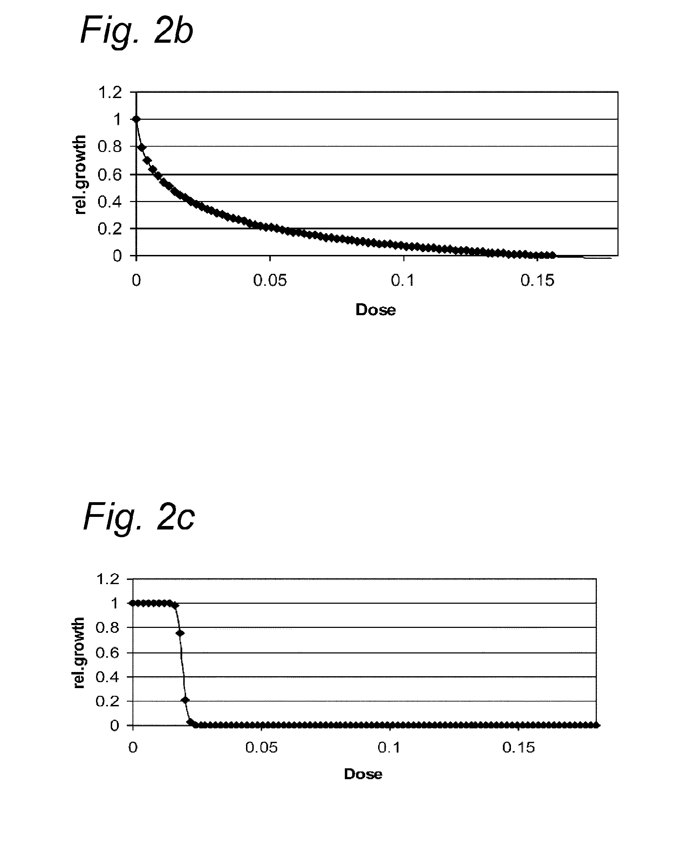

The results for propionate are shown in figure 2 (2a: Pen381 v. vanillin; 2b: Bysful2 v. vanillin; 2c: Fusox1 v. vanillin) and show that all moulds are sensitive to propionate. Most difficult species to inhibit are *Penicillium* and *Byssoclamys spp.* Both are inhibited at approximately 0.15%. Sensory experiments of propionate in water reveal that 630ppm is the max acceptable amount. Sensory tests in model drink show that 500ppm of propionate from a melon ferment has a specific but not a negative taste impact.

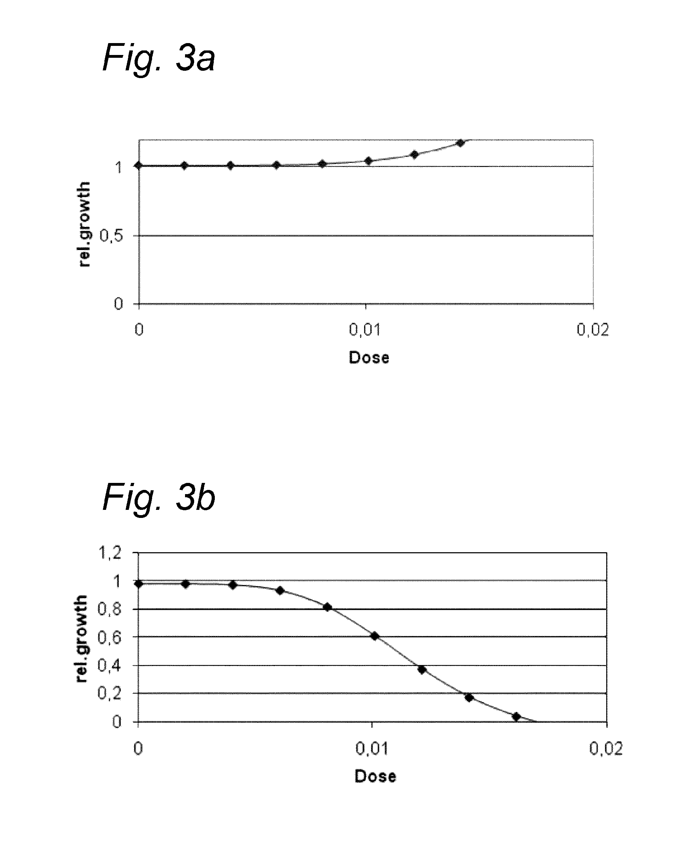

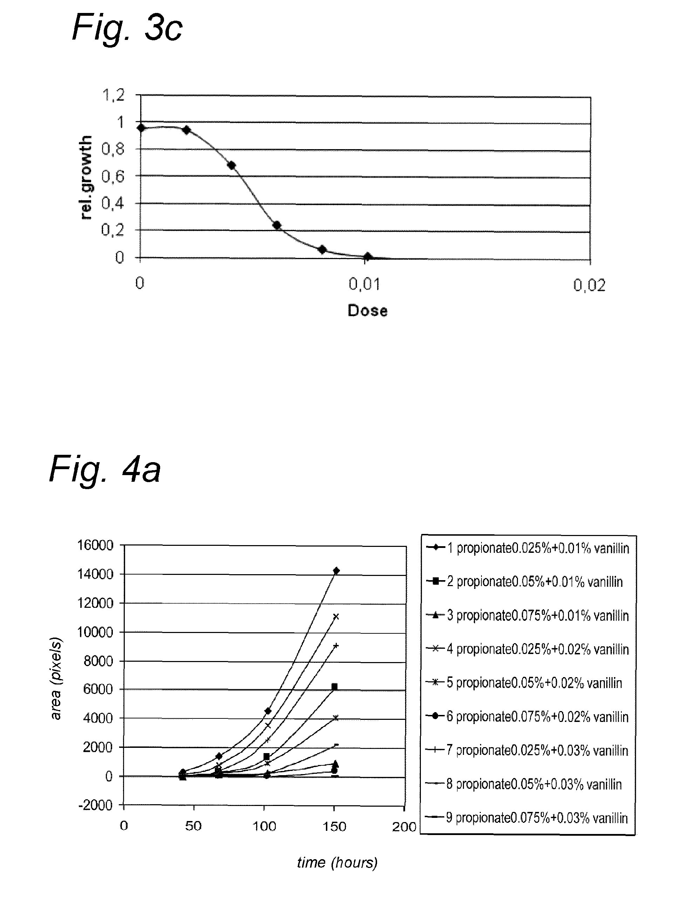

The effect of potassium cinnamate is shown in figure 3 (3a: Pen381 v. propionate; 3b: Bysful2 v. propionate; 3c: Fusox1 v. propionate)a-c. The figures show that *Penicillium* is not inhibited at levels up to 200ppm, which is a realistic amount for application in beverages. Moreover, a dramatic increase of *Penicillium* can be observed after 100ppm. This could be possibly explained by the consumption of potassium cinnamate of *Penicillium.*

### 3.2 Combinations tested on agar plates against pure cultures

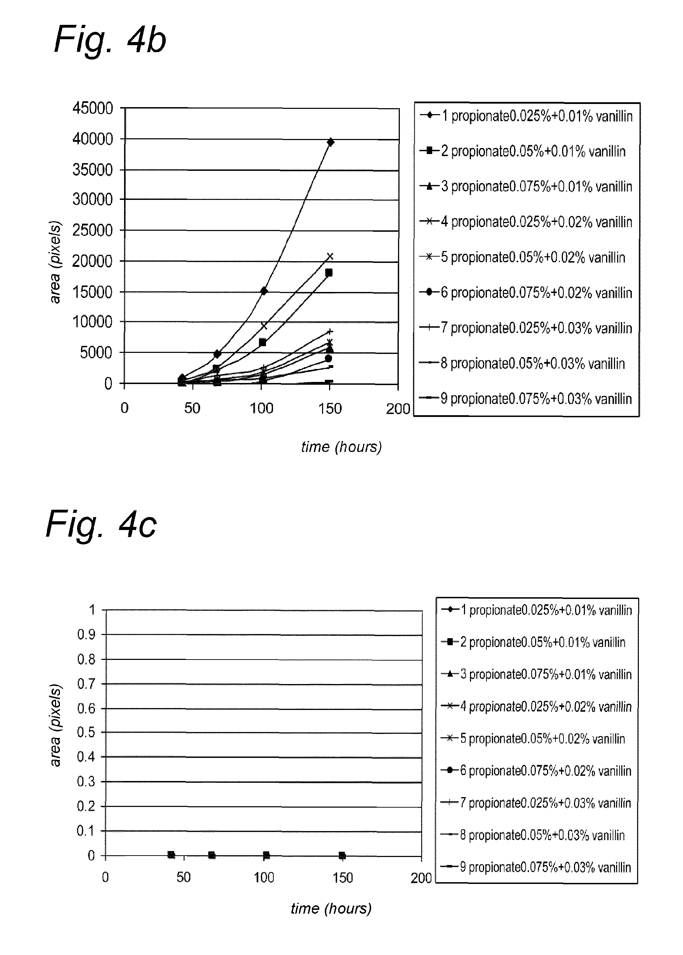

In order to reduce the amounts of the single ingredients the effect of combinations of ingredients was tested on the single moulds on agar plates of pH3.2. Several dosages of binary formulations of propionate combined with potassium cinnamate, and propionate combined with vanillin were tested. Figure 4 (4a: Pen381 v. propionate + vanillin; 4b: Bysful2 v. propionate + vanillin; 4c: Fusox1 v. propionate + vanillin) show the effect of propionate combined with vanillin on the growth curve of the four moulds. The figures reveal that *Penicillium* is the most difficult to inhibit and that complete inhibition takes place at propionate level of 0.075% (750ppm) combined with a vanillin level of 300ppm. *Fusarium* shows complete inhibition at all combinations.

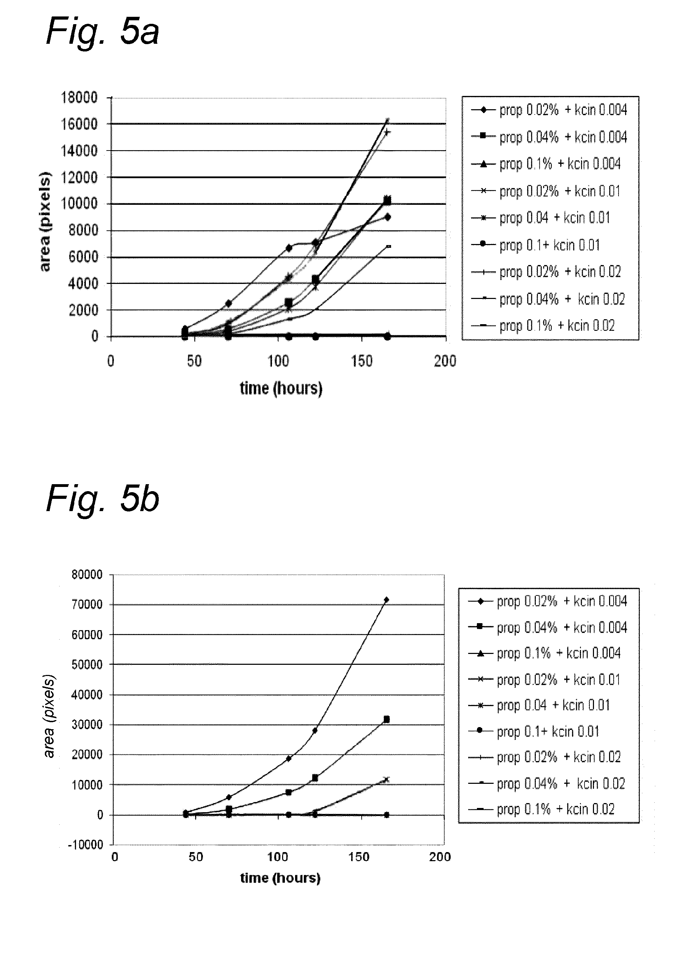

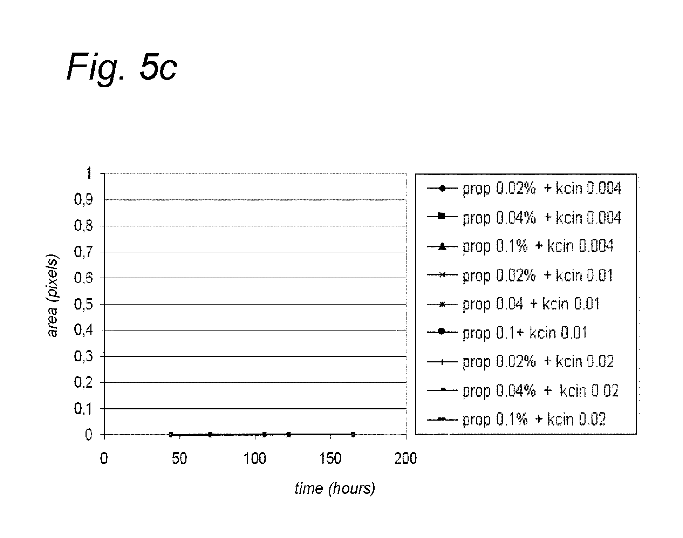

The other combination that was tested is propionate with potassium cinnamate and the figure 5 (5a: Pen381 v. propionate + cinnamate; 5b: Bysful2 v. propionate + cinnamate; 5c: Fusox1 v. propionate + cinnamate) depict the effect of this combination on the growth of the moulds. Although small, an enhanced inhibitive effect on *Penicillium* (fig. 5a) is visible when potassium cinnamate is combined with propionate. Again *Fusarium* is already completely inhibited at the lowest dosage of this combination.

The results of the combined experiment show that the amount of propionate can be reduced by two times if combined with an acceptable amount of vanillin as per sensory perspective. There is a 1/3 reduction when propionate is combined with a low amount of potassium cinnamate.

### 3.3 Combinations of components in model drink against a cocktail of moulds

In order to have an idea of the efficacy of the combination of propionate, vanillin and potassium cinnamate in model drink, some experiments were done in microwells plates. These experiments were visually observed after 3 weeks of incubation at 20° and used as pre-application experiments in order to create an expectation for the efficacy of the components in long term application experiments. The data that is shown in table 5 below is divided in "+" and "-". The "+" means visible growth, while the "-" means no visible growth of the mould cocktail at the specific concentrations. The experiment shows that 350ppm of potassium cinnamate still is not sufficient for inhibition of the growth of the mould cocktail. However, combined with an amount of nearly 400 ppm of propionate and 75ppm of vanillin the model drink is stable for at least 3 weeks.

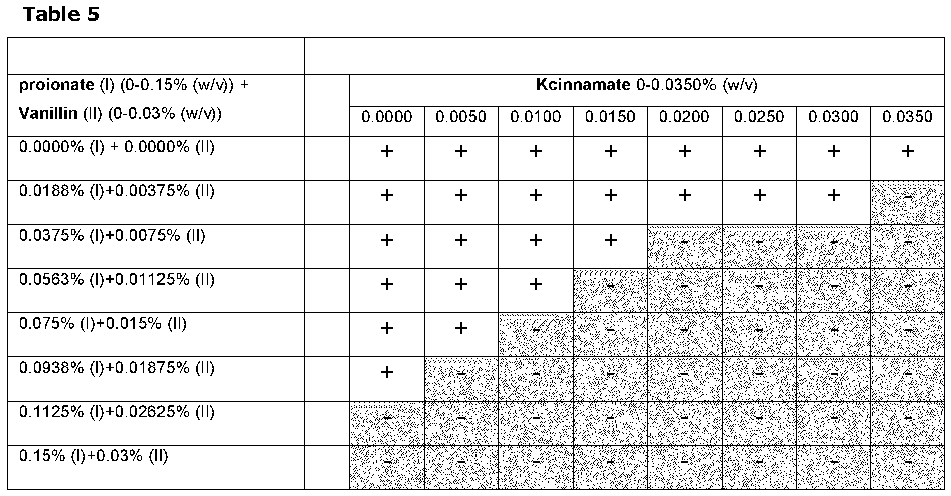

### 3.4 Long term application experiment

A solution to control carbonated beverages has been developed based on 200ppm of potassium cinnamate and 300ppm vanillin. The spectrum of this formulation could comprehend moulds by addition of propionate. As mentioned in table 4 the formulations existed of 100 or 200ppm potassium cinnamate, 150 or 300ppm vanillin and propionate ranging from 250ppm to 1250ppm of propionate.

The data were obtained by observation of growth or a volume of 1-20 ml was filtered and successively grown on agar in case no growth was observed.

Formulations 2 to 8 all were visually spoiled within several weeks. However, the other formulations, including the sorbate benzoate control, showed a quick decrease of viable counts at levels of propionate 800ppm and higher in combination with 200ppm of potassium cinnamate and 300ppm vanillin. After 3 weeks not any count was observed in the total volume of the model drink inoculated with 103 CFU. After 10 months still no outgrowth of moulds can be observed in the samples where 800ppm of propionate was used (sample 11, 12 and 13).

### Conclusions:

Using certain blends of the selected components, the combinations are very effective in inactivation of mould spores. The results show that combinations can achieve complete inactivation of spores. The potassium cinnamate, vanillin and propionate as individual antimicrobials are needed in higher concentration to inhibit the mould spores growth.

The susceptibility/resistance of different moulds to different antimicrobials is different and hence multiple species of relevant mould spores were evaluated as a cocktail in model drink against the proposed combinations and the microbial efficacy has been found consistent.

A preservative system was developed comparable to-, but without the use of-benzoate and sorbate that can be used in carbonated as well as non-carbonated beverages.

## Claims

1. Preservative system comprising (i) propionic acid or a salt thereof, in combination with at least one component selected from (ii) vanillin and derivatives thereof and (iii) cinnamic acid and salts and derivatives thereof.

2. Preservative system according to claim 1, comprising a combination of (i) propionic acid or a salt thereof, in combination with (ii) vanillin or a derivative thereof and (iii) cinnamic acid or a salt or a derivative thereof.

3. Preservative composition according to claim 1 or 2, comprising vanillin in an amount within the range of 1-10 wt%.

4. Preservative composition according to any one of the preceding claims, comprising cinnamate in an amount within the range of 5-50 wt%

5. Preservative composition according to any one of the preceding claims, comprising propionate in an amount within the range of 5-50 wt%.

6. Preservative composition according to any one of the preceding claims wherein the ratio of (i) : (ii) is within the range of 1.0 : 0.1-0.5 and/or the ratio of (i) : (iii) is within the range of 1.0 : 0.5-1.5.

7. Preservative composition according to any one of the preceding claims, comprising a fermentation broth as the propionate source.

8. Preservative composition according to any one of the preceding claims, containing less than 1 wt% of preservative agents selected from the group consisting of sorbic acid and benzoic acid.

9. Alimentary product, comprising an effective amount of (i) propionic acid or a salt thereof, in combination with at least one component selected from (ii) vanillin and derivatives thereof and (iii) cinnamic acid and salts and derivatives thereof.

10. Alimentary product according to claim 9 comprising an effective amount of a combination (i) propionic acid or a salt thereof, in combination with (ii) vanillin or a derivative thereof and (iii) cinnamic acid or a salt or a derivative thereof.

11. Alimentary product according to claim 9 or 10, which is selected from the group consisting of beverages, preferably from the group of non-carbonated beverages.

12. Alimentary product according to any one of claim 10-12, comprising vanillin in an amount within the range of 200-400 ppm; cinnamate in an amount within the range of 100-300 ppm; and propionate in an amount within the range of 500-800 ppm.

13. Alimentary product according to any one of claims 9-13, wherein the product is a beverage having a pH of at least 2, preferably at least 3, most preferably at least 3.2.

14. Use of a preservative composition according to any one of claims 1-9, for the preservation of an alimentary product; for the inactivation of mould spores in an alimentary product; and/or for inhibiting mould growth in an alimentary product

15. Use according to claim 14, wherein the mould is selected from the group of *Fusarium oxisporum, Aspergillus niger, Byssoaclamys fuvla* and *Penicillium sp.*
